## Europäisches Patentamt
## European Patent Office
## Office européen des brevets

(19)

(11) Publication number: **0 011 953**
**B1**

(12) **EUROPEAN PATENT SPECIFICATION**

(45) Date of publication of patent specification: **25.11.81**

(51) Int. Cl.³: **A 23 L 1/16, A 23 L 1/10**

(21) Application number: **79302500.8**

(22) Date of filing: **07.11.79**

(54) Process for producing instant pasta products.

(30) Priority: **23.11.78 DE 2850750**

(43) Date of publication of application:
**11.06.80 Bulletin 80/12**

(45) Publication of the grant of the European patent:
**25.11.81 Bulletin 81/47**

(84) Designated Contracting States:
**AT BE CH FR IT NL SE**

(56) References cited:
**AU - A - 37 201/68**
**AU - B - 408 156**
**AU - B - 430 246**
**DE - A1 - 2 629 093**
**DE - A1 - 2 659 027**

(73) Proprietor: **CPC INTERNATIONAL INC.**
**International Plaza**
**Englewood Cliffs, N.J. 07632 (US)**

(72) Inventor: **Bohrmann, Hans**
**Moerikeweg 8**
**D-7129 Talheim (DE)**
Inventor: **Herbig, Gerhard**
**Weststrasse 34**
**D-7100 Heilbronn (DE)**
Inventor: **Ulmer, Rolf**
**Hauptstrasse 4**
**D-7100 Heilbronn-Sontheim (DE)**
Inventor: **Speth, Gerhard**
**Drosselweg 6**
**D-7100 Heilbronn-Sontheim (DE)**

(74) Representative: **Pennant, Pyers et al,**
**Stevens, Hewlett & Perkins 5 Quality Court**
**Chancery Lane**
**London, WC2A 1HZ (GB)**

Courier Press, Leamington Spa, England.

Process for producing instant pasta products

This invention relates to a process for producing pasta products whch can be prepared for consumption by moistening them with hot, especially boiling water and shortly allowing them to stand (instant pasta products) by precooking alimentary pasta shaped bodies in an aqueous medium, quenching and rinsing shaped pasta articles cooked to a ready-to-eat state with cold water and subsequently drying said bodies.

Pasta products have long been a well-known food popular with practically all peoples of the world. They are inexpensive, they may be obtained in good quality from raw materials which, unlike the high-grade flours needed for high-quality bread, may be produced also by a relatively primitive mill industry, and they have a long shelf life even where no preservatives are added and/or expensive storage is dispensed with. As a result of these circumstances they have become a true staple food in many countries.

In the light of this it was only logical that pasta products were among the first foods to be manufactured industrially and that these industrial products today have largely replaced home-made pasta products.

In spite of all their advantages pasta products, regardless of their origin, show a disadvantage as far as their relatively inconvenient and especially time-consuming preparation is concerned, which has long been regarded as disturbing and which is one of the reasons why pasta products have won only slow and limited acceptance in some regions which cannot be regarded as traditional "pasta-eating countries". This disadvantage has become even more conspicuous as quickcooking products were developed in connection with other foods.

The food industry has therefore for decades been making intensive efforts to develop pasta products with a reduced cooking time and, after this problem had been solved more or less satisfactorily to develop also "instant pasta products" as defined above.

Although the pattern to be followed for the purpose —precooking of the raw shaped pasta articles, quenching and rinsing of the pasta products cooked to a ready-to-eat state, and subsequent drying by the manufacturer — at first sight appeared to be easy, transmitting this principal into practice then turned out to be rather difficult. Difficulties were encountered mainly on account of two problems, i.e. the tendency of the paste articles to stick to one another during cooking and/or subsequent treatment and the problem of manufacturing products with proper rehydrating properties. These difficulties so far have not been solved in a satisfactory way, at least as far as pasta products are concerned which, in terms of composition and shape, meet the expectations commonly placed in such products.

There have been processes disclosed permitting "pasta products" of a special type customary in Asia, notably Japan, i.e. so-called "Ramen noodles", to be produced which show instant properties as defined in this invention. However, these instant Ramen noodles are precooked in line with the clasical Japanese method of preparation according to which they are parboiled in an aqueous medium and are then cooked to a ready-to-eat state in the presence of oil or fat and are dried. So irrespective of whether the parboiled Ramen noodles are deep-fried in an oil bath to cook then to a ready-to-eat state DE-A-22 30 698) or the raw Ramen noodles are coated with oil, heated with steam and then dried at relatively high temperatures (DE-A-26 59 027) they show a frequently undesired high fat content and therefore a flavour which in Western countries is regarded at atypical in many pasta dishes. The impression that Ramen noodles deviate from European standards in terms of the characteristic organoleptic properties of pasta products is increased by the fact that Ramen noodles in general and especially the instant Ramen noodles obtained according to the known processes have a relatively spongy structure and so fail to show the "bite" appreciated by Western noodle eaters. Ramen noodles, finally, contain ingredients which are not only alien to classical European pasta products but which are at least disputed as far as their physiological safety is concerned and which sometimes fail to meet the relevant food laws, e.g. the German regulation on pasta products, which means that they cannot be marketed under designations reserved for products complying with this regulation.

There have, of course, also attempts been made to develop processes for the manufacture of instant pasta products which comply with European tastes but despite considerable efforts the problem so far could not be solved satisfactorily. A known process, for instance, in which a paste of the usual composition is shaped by extrusion into small pieces resembling cereal grains and these pieces of paste are subsequently further processed by heating, tempering and drying under specific conditions (US - A - 3 192 049) yields instant pasta products which show acceptable rehydrating properties but which do not solve the problem because the consumer normally does not accept pasta products whose appearance resembles that of cooked rice.

The process at best acceptable under the circumstances is another known process in which alimentary paste of common composition is first shaped into raw pasta products with a wall thickness keeping within narrow limits, i.e. about 0.46 to 0.63 mm, whereupon the shaped products are cooked to a ready-to-eat state by heating with steam, while being (having to be) moistened by simultaneous spraying with hot water, and are then quenched and dried in the manner known (DE - A - 1 807 910). Although the pasta products obtained according to this known process usually show an acceptable rehydrating behaviour when the rather narrow, per se known wall thickness is adhered to, neither the process nor the resulting products are really satisfying.

A disadvantage is, for instance, seen in the fact that it is necessary to keep within a very narrow wall thickness range and to adhere to this range already when making the raw shaped paste articles which due to their low wall thickness and the limited strength resulting from it are difficult to handle in the subsequent process steps, apart from the fact that approximation to the upper or lower limit fixed for the wall thickness involves the danger of the finished pasta products failing to show the required rehydrating properties.

Much more serious is the further disadvantage that the process is rather complicated especially as far as the cooking step is concerned inasmuch as even seemingly unimportant deviations from the optimum conditions to be ascertained empirically may cause faulty batches, for instance superficially or even entirely overcooked or unevenly and insufficiently precooked pasta products, and also inasmuch as pasta products cannot be prevented from partly sticking to one another during precooking and/or drying even if a very careful procedure is adopted.

It had therefore been an object of the invention to create a process for producing instant pasta products which avoids the disadvantages inherent in the state of the art and which especially permits the reliable production, in a relatively simple manner, of instant pasta products showing the required rehydrating properties and matching classical European pasta products in terms of composition and organoleptic properties when converted into a ready-to-eat state, which is not subject to narrow limitations during cooking as regards the thickness of the shaped paste articles, permits precooking to be carried out in a liquid aqueous medium or common composition, and which finally supplies products practically free of shaped paste articles having a tendency to stick to one another.

It has been found that this object may surprisingly be accomplished by a process of the type described above, which is characterized in that

(a)  the alimentary paste in the form of a band whose thickness exceeds the desired wall thickness of the finished instant pasta product is cooked to a ready-to-eat state in a water bath,

(b)  the paste band which has been cooked to a ready-to-eat state and has been quenched and rinsed with cold water in the manner known is predried to a water content of about 14 to about 50% w/w,

(c)  the predried paste band is stretched until its thickness corresponds approximately to the desired wall thickness of the finished instant pasta product, with the proviso that the ratio of thickness prior to stretching to the wall thickness after stretching (stretching ratio) is so selected that cracks develop in the surface of the paste band during stretching,

(d)  the paste band is divided in the manner known into paste articles of the desired shape and dimension, and

(e)  is finally dried to a residual water content common for pasta products,

on the understanding that process steps (c) and (d) or (d) and (e) may be carried out simultaneously or in the opposite order.

This means that the raw alimentary paste in the process of the invention, as distinct from the state of the art, does not have to be shaped prior to cooking to a read-to-eat state into articles of the shape and dimension desired for the end product but has merely to be formed into a paste band whose thickness may be selected essentially freely or may be adapted to the other process variables, due consideration being given, of course, to the fact that the stretching step of the invention causes a thickness reduction in which the wall thickness must of course, not fall below the desired wall thickness that may have been fixed for the end product.

Since the alimentary paste in the process of the invention is not processed into pieces of the shape and dimension desired for the end product prior to cooking to a ready-to-eat state, the two-phase cooking medium of steam and sprayed hot water that is required according to the state of the art may advantageously be dispensed with when cooking the paste to a ready-to-eat state because the paste band to be cooked according to the invention may readily be passed through a cooking bath in such a way that there is no danger of bands sticking to one another, and if such sticking should in fact occur to a small extent it will easily be eliminated in the shaping steps of the process of the invention following cooking to a ready-to-eat state.

An essential feature of the invention which decides on the success envisaged is that the paste band, which has been cooked to a ready-to-eat state and has been quenched and rinsed in the conventional way, is neither subjected as it is to further shaping treatments nor dried to the residual water content but is subjected to partial drying in that the water content is lowered to such an extent that the paste on the one hand does no longer show any significant inclination to sticking and on the other hand is still sufficiently plastic to be drawn to the desired final wall thickness in the subsequent shaping process by stretching in such a way that fine cracks are produced in the paste while the paste articles nevertheless do not tear or crumble irregularly.

Stretching is usually followed by shaping in that the paste band is divided into paste articles of the desired shape and dimension, for instance by cutting or punching.

As already mentioned, this order of sequence, in part, is not compulsory. It is possible to have stretching immediately followed by final drying, with the division of the paste band being performed simultaneously with or after final drying or else before and/or together with the stretching.

As mentioned earlier, the process of the invention is extremely flexible as far as the selection of the thicknes of the paste band to be cooked is concerned. Nevertheless it is generally recommended to use a thickness from about 0.5 to 3 and preferably from about 0.7 to 1.8 mm in order to avoid excessive cooking and/or predrying times and/or extreme stretching ratios. Where common pasta forms are involved, paste bands with a thickness from about 0.8 to 1.2 mm have proved to be particularly suitable.

In the process of the invention the paste bands are cooked to a ready-to-eat state in a water bath which, as a rule, is under normal pressure and is heated to a temperature ranging at or shortly below the boiling point but which, in principle, may also be provided in a pressure vessel, for instance when it is desirable to shorten cooking times by higher temperatures. The required cooking time depends not only on the cooking temperature but also and especially on the thickness of the paste band and on whether the paste is still completely raw or has already been partially cooked to a more or less large extent. It is mentioned here that the cooking time may be lowered considerably, for instance by partially cooking the paste before and/or during shaping to a paste band, e.g. by means of an extruder. Cooking of the paste band to a ready-to-eat state in the water bath may be accomplished in the process of the invention either batchwise or continuously, the latter method being generally preferred although it is more complicated technically. It is possible to continuously pass through the water bath either an endless paste band or paste band sections that have been cut to length.

The latter alternative, while being less elegant, is preferred because it is less complicated and especially because it is less susceptible to failure and troubles may be eliminated faster and more easily.

It is noted in this context that thin paste bands, in particular, show a relatively low mechanical strength, which normally makes it necessary to arrange supporting and/or guiding elements for these paste bands in the water bath. This is necessary expecially when several paste bands or paste band sections are cooked in a water bath at the same time or when endless paste bands are passed through the water bath along a waved pathway in order to keep the length of the water bath within tolerable limits with the cooking times and the throughput given.

It is also noted that it has proved advantageous in several respects to use supporting and guiding elements which are at least partly perforated in order to give the water of the cooking bath even access to all parts of the paste band surface, and to flow the liquid of the cooking bath and optionally, especially where directly heated cooling baths are involved, a vaporous auxiliary medium against the openings of the supporting and guiding elements, in which case it is possible to produce the motion of cooking bath liquid in relation to supporting and guiding elements not only by generating a flow in the bath liquid itself but partly or wholly also by moving the supporting and guiding elements (as well as the paste bands).

In a preferred embodiment of the invention the cooking bath liquid is partly withdrawn intermittently or continuously and is replaced by fresh cooking bath liquid in order to avoid an excessive accumulation of material stemming from the paste bands. The cooking bath liquid withdrawn is preferably recycled wholly or partly to the paste.

As regards the cooking bath liquid it is noted that this liquid need not consist exclusively of water but that it may contain various per se known additives, especially seasonings and/or processing aids.

Following cooking to a ready-to-eat state, which is terminated when the paste band has lost its mealy and doughy texture, the paste bands are quenched and rinsed, for instance by immersion in or spraying with cold water, to remove surface starch. Being per se known, this process step need not be explained any further.

After quenching the paste bands in the process of the invention are subjected to a predrying step which differs basically from the state of the art chiefly on account of the fact that paste bands rather than finally shaped paste articles are dried and that these paste bands are merely dried partially instead of being dried to the residual water content of the end product. Which water product should most suitably be chosen within the range specified above depends on the circumstances in each particular case. At any rate the optimum value in each case should be selected with due consideration being given to the circumstances that declining water content on the one hand lowers the undesired tendency of the paste bands to stick to one another but on the other hand also lowers their plasticity which should, in fact, be reduced to a point where the desired crack formation may occur during subsequent stretching but which must by no means drop to a point where paste bands become too brittle for the subsequent shaping steps. An acceptable compromise normally is a water content of the predried paste bands ranging from 16 to 27, mostly 18 to 26 and especially 20 to 24% w/w. Predrying may be accomplished either by the air drying method commonly employed in connection with pasta products or by contact drying on heated rolls or metal bands. Predrying by means of infrared light and/or microwaves has been found to be particularly effective.

It may be advantageous to effect predrying and stretching in two or more stages. For example, the band may be predried to a water content of 25 to 50% w/w, preferably 28 to 40% w/w, then stretched, then further predried to a water content of 14 to 28% w/w, preferably 20 to 24% w/w, and finally further stretched to the desired wall thickness.

As outlined earlier, predrying usually is immediately followed by stretching which brings the paste bands to the desired final wall thickness and produces many fine cracks in the surface. This process step may, in principle, be carried out with any equipment having a relevant effect including, for instance, chipping or planing, stamping and drawing tools but normally rolling mills with a positive slip and especially two-roll stands are used. Cutting or grooved rolls or the like frequently are particularly suitable for the purpose, which do not only stretch the predried paste bands but also cut them into strips of the desired width, stamp them and/or crosscut them to the desired length.

The most favorable stretching ratio, of course, depends on the individual circumstances and may vary within wide limits. Experience has shown that the effects desired to be obtained from stretching usually are achieved when stretching ratios ranging from 1.2:1 to 4:1, preferably from 1.5:1 to 3:1 and especially from 1.6:1 to 2.4:1 are employed. When paste bands with a relatively high water content are involved it is generally possible and sometimes even necessary to use relatively high stretching ratios while paste bands which have been predried to a comparatively large extent usually require or permit only rather low stretching ratios.

Stretching may, if desired, also be performed in two or several steps, and in that case predrying should preferably be accomplished in steps, too. This embodiment is recommended especially where comparatively high (total) stretching ratios are involved.

The predried and usually stretched paste bands are divided preferably by means of cutting and/or punching tools into paste articles, which except when division is performed prior to stretching, after this step show essentially the shapes and dimensions of the finished paste articles. When division is effected after stretching it is possible, as already mentioned, that final drying, which normally constitutes the last process step, is advanced, if this is desired, or that it is carried out simultaneously. The first alternative is recommended especially when paste articles of somewhat irregular outer shape are desired while the latter alternative usually is advantageous when paste bands are divided by punching, especially combined stamping and punching.

The examples below are given to illustrate but by no means to limit the invention and, in connection with the comparative trial, demonstrate the advantages offered by it.

Example 1

In a paste mixer 100 parts of hard wheat dust were blended with 25 parts of tap water a temperature of about 30°C for about 30 minutes, fed to a paste extruder and shaped into a band. The jacket heater of the mixer was adjusted to 28—32°C. The temperature of the extruder head was 38—42°C and the pressure 60—70 bar. The die showed an opening of 40 x 0.8 mm and the paste band a thickness of about 0.9 mm and a water content of 25—26%.

The paste band was introduced into a water bath of 100°C and cooked for 12 minutes. The water content of the paste band was 75%. The cooked paste band was placed in cold tap water of about 10°C and rinsed in this water for 1 minute. Upon leaving the immersion bath the paste band showed a water content of 78%.

The paste band was then conditioned in air at room temperature to a water content of about 70% and was predried to a water content of 23% by contact drying on a metal band heated to 100°C. The paste band thus pretreated was stretched on a two-roll stand which had been adapted to this purpose. The rolls showed a width of 200 mm and a diameter of 150 mm. They revolved at speeds of 2.5 and 5.0 RPM respectively, corresponding to a positive slip of 1:2. The gap between the rolls had been adjusted to 0.2 mm. Upon leaving the rolls the band was found to be stretched and cracked on the surface, the stretching ratio being about 1.8:1.

The stretched paste band was then sent through a cutting machine and cut into flat noodles, 4 mm wide and 40 mm long.

The noodles were dried on a hurdle dryer by means of hot air of 70°C to a residual water content of about 10%.

The noodles thus produced did not show any tendency to stick to one another and after moistening with water of 95°C were ready for consumption after 4 minutes.

Comparative Trial

For comparison instant noodles were prepared according to the process known from DE - B - 1 807 910 as follows:

100 parts of hard wheat dust were thoroughly blended with 25 parts of warm tap water for about 20 minutes, fed to a paste extruder and shaped to articles, 0.55 mm thick, by means of a die heated to 60°C. The pressure was 50—60 bar and the water content of the shaped articles 26%

The shaped articles thereby produced were cooked to a ready-to-eat state for 8 minutes in a cooking chamber at low-pressure steam of 105°C, while simultaneously being sprayed with hot water, and were then immersed in a cold water bath.

The shaped articles were then dried in a hurdle dryer by means of hot air of 70°C to a residual water content of about 7%.

While the noodles obtained in this way showed a rehydrating behavior approximately comparable to that of the product in Example 1, it was impossible, even when using the utmost care, to prevent the shaped articles from sticking to one another during cooking, immersion and drying.

Example 2

From 100 parts of EC-standard semolina, 1.9 parts of powdered egg yolk and 25 parts of tap water of about 30°C a paste band with a width of 100 mm, a thickness of 0.9 mm and a water content of 26% was produced under the usual conditions.

This paste band was cooked as described in Example 1 and was subsequently rinsed in cold water.

After this pretreatment the paste band with a water content of 75—76% was then predried in a circulating-air oven to a water content of 22—24% and was subsequently stretched as described in Example 1, the stretching ratio achieved again being 1.8:1.

The stretched paste band was then sent through a cutting machine and was cut to vermicelli, 1 mm wide.

The vermicelli were dried on a hurdle dryer by means of hot air of 70°C to a residual water content of 8%.

After this pretreatment the vermicelli showed absolutely no tendency to stick to one another and, having been moistening with hot water of 95°C, were ready for consumption after 4 minutes.

Example 3

From 100 parts of EC-standard semolina, 1.9 parts of powdered egg yolk and 25 parts of tap water of 30°C a paste band with a width of 200 mm, a thickness of 2 mm and a water content of 26% was produced.

This paste band was cooked in a water bath of 95°C during 40 minutes and was then rinsed in water of about 10°C for about 1 minute. The water content of the paste band then was about 59%.

By irradiation with infrared light the paste band subsequently conditioned to a water content of about 60% and was then predried to a water content of about 35% on a metal band heated to 100°C.

The paste band pretreated in this manner was then stretched on the two-roll stand described in Example 1 with a roll gap of 0.5 mm, the stretching ratio being about 2:1.

After another predrying step on the heated metal band to reduce the water content to about 24%, the thickness of the paste band was one more reduced by means of said two-roll stand with a roll gap of 0.2 mm, the stretching ratio again being about 2:1.

Having thus been stretched at a total stretching ratio of 4:1, the paste band was sent through a cutting machine and was cut to flat noodles, 4 mm wide and 40 mm long. The noodles were dried in a circulating-air oven by means of hot air of 70°C to a residual water content of about 7%.

The noodles produced in this manner showed absolutely no tendency to stick to one another and, having been moistening with water of 95°C, were ready for consumption after 4 minutes.

Claims

1. A process for producing pasta products which can be prepared for consumption by moistening them with hot, expecially boiling water and shortly allowing them to stand (instant pasta products) by precooking alimentary paste shaped bodies in an aqueous medium, quenching and rinsing the shaped paste bodies cooked to a ready-to-eat state with cold water and subsequently drying said bodies, characterized in that
(a)   the alimentary paste in the form of a band whose thickness exceeds the desired wall thickness of the finished instant pasta product is cooked to a ready-to-eat state in a water bath,
(b)   the paste band which has been cooked to a ready-to-eat state and has been quenched and rinsed with cold water in the manner known is predried to a water content of about 14 to about 50% w/w.
(c)   the predried paste band is stretched until thickness corresponds approximately to the desired wall thickness of the finished instant pasta product, with the proviso that the ratio of thickness prior to stretching to the wall thickness after stretching (stretching ratio) is so selected that cracks develop in the surface of the paste band during stretching.
(d)   the paste band is divided in the manner known into paste articles of the desired shape and dimesion, and
(e)   is finally dried to a residual water content common for pasta products,
on the understanding that process steps (c) and (d) or (d) and (e) may be carried out simultaneously or in the opposite order.

2. The process of claim 1, characterized in that paste bands with a thickness from about 0.5 to 3, preferably from 0.7 to 1.8, and

**11**     **0 011 953**     **12**

especially 0.8 to 1.2 mm are precooked.

3. The process of claim 1 or 2, characterized in that the paste band is precooked in the form of an endless band or of paste band sections cut to length, said paste band being passed through the water bath preferably continuously and especially on a path which is longer than the distance between the point at which the paste band enters the water bath and the point at which it leaves the water bath.

4. The process of one of the foregoing claims 1 to 3, characterized in that in process step (b) the paste band is predried to a water content from 16 to 27, preferably 18 to 26 and especially 20 to 24% w/w.

5. The process of one of the foregoing claims 1 to 4, characterized in that the pre-drying step (b) is performed in two or more stages, the paste band being stretched after each pre-drying stage.

6. The process of one of the foregoing claims 1 to 5, characterized in that in process step (c) the paste band is stretched preferably by means of a rolling mill with a positive slip, espcially a two-roll stand, at a stretching ratio from 1.2:1 to 4:1, preferably from 1.5:1 to 3:1 and especially from 1.6:1 to 2.4:1.

7. The process of one of the foregoing claims 1 to 6, characterized in that in process step (d) the paste band is divided by means of cutting and/or punching tools.

8. The process of one of the foregoing claims 1 to 7, characterized in that process step (a) is performed in a water bath containing additives, especially seasonings and/or processing aids.

9. The process of one of the foregoing claims 1 to 8, characterized in that in process step (a) the water bath is circulated and is moved through the cooking zone preferably in countercurrent to the paste band.

**Revendications**

1. Procédé pour fabriquer des produits à base de pâtes que l'on peut préparer pour la consommation en les imprégnant d'eau chaude, notamment bouillante, et en les laissant brièvement reposer (produits à préparation instantanée à base de pâtes, en soumettant des corps façonnés en pâtes alimentaires à de la pré-cuisson en milieu aqueux, en les refroidissant et rinçant à l'eau froide les corps de pâte façonnés et cuits jusqu'à être prête à la dégustation et en séchant ensuite ces corps, procédé caractérisé en ce que:

(a) on cuit dans un bain-marie, jusqu'à ce qu'elle soit prête à la consommation, la pâte alimentaire sous forme s'une bande dont l'épaisseur excède l'épaisseur de paroi voulue pour le produit terminé, à préparation instantanée à base de pâtes;

(b) on soumet la bande de pâte, qui a été cuite jusqu'a etre prête à comsommer et a été refroidie et rincée à l'eau froide de façon connue, à du pré-séchage jusqu'à une teneur en eau d'environ 14 à 50% en poids/poids;

(c) on étire la bande de pâte pré-séchée jusqu'à ce que son épasseur corresponde approximativement à l'épaisseur de paroi voulue pour le produit terminé, à préparation instantanée à base de pâte, étant bien entendu que le rapport de l'épaisseur avant étirage à l'épaisseur de paroi après étirage (taux d'étirage) est choisi de manière que des craquelures se développent à la surface de la bande de pâte pendant l'étirage;

(d) on divise de façon connue la bande de pâte en des articles de pâtes ayant la forme et la dimension voulues, et

(e) on sèche finalement jusqu'à une teneur en eau résiduelle courante pour les produits à base de pâtes, étant bien entendu que les étapes opératoires (c) et (d) ou bien (d) et (e) peuvent être effectuées simultanément ou dans l'ordre inverse.

2. Procédé selon la revendication 1, caractérisé en ce qu'on pré-cuit des bandes de pâte ayant une épaisseur d'environ 0,5 à 3, de préférence de 0,7 à 1,8 mm et notamment de 0,8 à 1,2 mm.

3. Procédé selon la revendication 1 ou 2, caractérisé en ce qu'on pré-cuit la bande de pâte sous forme d'une bande sans fin ou de tronçons de bande de pâte découpés dans le sens de la longueur, cette bande de pâte étant passée de préférence en continu dans la bain-marie et notamment selon un trajet que est plus long que la distance séparant le point d'entrée de la bande de pâte dans le bain-marie et le point où elle quitte le bain-marie.

4. Procédé selon l'une des revendications 1 à 3, caractérisé en ce qu'au cours de l'étape (b) du procédé, on pré-sèche la bande de pâte jusqu'à une teneur en eau de 16 à 27, de préférence de 18 à 26 et notamment de 20 à 24% en poids/poids.

5. Procédé selon l'une des revendications précédentes 1 à 4, caractérisé en ce qu'on effectue l'étape de pré-séchage (b) en deux on plusieurs stades, la bande de pâte étant étirée après chaque stade de pré-séchage.

6. Procédé selon l'une des revendications précédentes 1 à 5, caractérisé en ce que, dans l'étape (c) du procédé, on étire la bande de pâte de préférence à l'aide d'un équipement du genre laminoir à glissement forcé, notamment un bâti à deux cylindres, à un taux d'étirage de 1,2:1 à 4:1, de préférence 1,5:1 à 3:1 et notamment de 1,6:1 à 2,4:1.

7. Procédé selon l'une des revendications précédentes 1 à 6, caractérisé en ce qu'au cours de l'étape (d) de procédé, on divise la bande de pâte à l'aide d'outils de découpage et/ou de poinçonnage.

8. Procédé selon l'une des revendications précédentes 1 à 7, caractérisé en ce qu'on effectue l'étape (a) du procédé dans un bain-marie contenant des additifs, notamment des assaisonnements et/ou des adjuvants de traitement.

9. Procédé selon l'une des revendications 1 à 8, caractérisé en ce qu'au cours de l'étape (a) du procédé, on fait circuler l'eau du bain-marie et on la déplace dans la zone de cuisson, de préférence à contre courant par rapport à la bande de pâte.

## Patentansprüche

1. Verfahren zur Herstellung von durch Übergießen mit heißem, insbesondere siedendem Wasser und Kurzzeitiges Stehenlassen verzehrsfertig zubereitbaren Teigwaren (Instant-Teigwaren) durch Vorkochen von Teigmassenformkörpern in einen wässerigen Medium, Abschrecken und -spülen der gargekochten Teigmassenformkörper mit Kaltwasser und nachfolgende Trocknung, dadurch gekennzeichnet, daß man

(a) die Teigmasse in Form eines Teigbandes, dessen Dicke größer als die gewünschte Wandstärke der fertigen Instant-Teigware ist, in einem Wasserbad gargekocht,

(b) das gargekochte und in an sich bekannter Weise mit Kaltwasser abgeschreckte und gespülte Teigband auf einen Wassergehalt von etwa 14 bis 50 Bew.-% vortrocknet,

(c) das vorgetrocknete Teigband verstreckt bis seine Dicke in etwa der Sollwandstärke der fertigen Instant-Teigware entspricht, mit der Maßgabe, daß das Verhältnis der Dicke vor zur Wandstärke nach dem Verstrekken (Reckverhaltnis) so gewählt wird, daß sich in der Oberfläche des Teigbandes beim Verstrecken Risse bilden,

(d) das Teigband in an sich bekannter Weise in Teigwarenkörper der jeweils gewünschten Form und Abmessungen zerteilt, und

(e) schließlich auf einen bei Teigwaren üblichen Restwassergehalt endtrocknet, wobei gegebenenfalls die Verfahrensschritte (c) und (d) oder (d) und (e) jeweils gleichzeitig oder in umgekehrter. Reihenfolge durchgeführt werden können.

2. Verfahren nach Anspruch 1, dadurch gekennzeichnet, daß Teigbänder mit einer Dicke von etwa 0,5 bis 3, vorzugsweise 0,7 bis 1,8 und insbesondere 0,8 bis 1,2 mm vorgekocht werden.

3. Verfahren nach Anspruch 1 oder 2, dadurch gekennzeichnet daß das Teigband in Form eines endlosen Bandes oder von abgelängten Teigbandstücken vorgekocht wird, wobei man es vorzugsweise kontinuierlich und insbesondere auf einer Bahn, die länger als der Abstand zwischen dem Eintauch und dem Austrittspunkt in das bzw. aus dem Wasserbad ist, durch das Wasserbad führt.

4. Verfarhen nach einem der Anprüche 1 bis 3, dadurch gekennzeichnet, daß das Teigband im Verfahrensschritt b) auf einen Wassergehalt von 16 bis 27, vorzugsweise 18 bis 26 und insbesondere 20 bis 24 Gew.-% vorgetrocknet wird.

5. Verfahren nach einem der Ansprüche 1 bis 4, dadurch gekennzeichnet, daß der Vortrocknungsschritt (b) in zwei oder mehr Stufen durchgeführt wird, wobei das Teigband nach jeder Vortrocknungsstufe verstreckt wird.

6. Verfahren nach einem der Ansprüche 1 bis 5, dadurch gekennzeichnet, daß das Teigband in Verfahrensschritt c), vorzugsweise mittels eines voreilenden Walzwerks, insbesondere eines 2 Rollen-Walzwerks, in einem Reckverhältnis von 1,2:1 bis 4:1, vorzugsweise 1,5:1 bis 3:1 und insbesondere 1,6:1 bis 2,4:1 verstreckt wird.

7. Verfarhren nach einem der Ansprüche 1 bis 6, dadurch gekennzeichnet, daß das Teigband im Verfahrensschritt d) mittels Schneid- und/oder Stanzwerkzeugen zerteilt wird.

8. Verfahren nach einem der Ansprüche 1 bis 7, dadurch gekennzeichnet, daß der Verfahrensschritt (a) in einem Zusätze, insbesondere Würz- und/oder Verarbeitungsilfsmittel, enthaltenden Wasserbad durchgeführt wird.

9. Verfahren nach einem der Ansprüche 1 bis 8, dadurch gekennzeichnet, daß das Wasserbad in Verfahrensschritt (a) umgepumpt und durch die Kochzone vorzugsweise in Gegenstrom zum Teigband geführt wird.